# EUROPÄISCHE PATENTSCHRIFT

(11) **EP 2 688 663 B1**
(45) Veröffentlichungstag und Bekanntmachung des Hinweises auf die Patenterteilung: **18.05.2022**
(21) Anmeldenummer: 12714567.0
(22) Anmeldetag: 22.03.2012
(51) Int. Cl.: B01D 67/00

(54) **VERFAHREN ZUR HERSTELLUNG EINER MEMBRAN**
METHOD FOR PRODUCING A MEMBRANE
PROCÉDÉ DE PRODUCTION D'UNE MEMBRANE

(30) Priorität: 24.03.2011 DE 102011015077
(43) Veröffentlichungstag der Anmeldung: 29.01.2014
(73) Patentinhaber: Oechsle, Dietmar, 73529 Schwäbisch Gmünd (DE)
(72) Erfinder: DAHLBERG, Christian, 72658 Bempflingen (DE); OECHSLE, Dietmar, 73529 Schwäbisch Gmünd (DE); MÜLLER, Erik, 70190 Stuttgart (DE); WIETSCHORKE, Werner, 70190 Stuttgart (DE)
(74) Vertreter: Daub, Thomas
(86) Internationale Anmeldenummer: PCT/EP2012/001259
(87) Internationale Veröffentlichungsnummer: WO 2012/126624

(56) Entgegenhaltungen:
- EP-A1- 0 547 471
- EP-A1- 1 932 582
- EP-A1- 2 111 908
- EP-A2- 0 750 937
- WO-A1-2008/046779
- WO-A1-2010/090174
- DE-A1- 2 346 011
- DE-A1- 10 057 622
- DE-A1- 19 511 151
- US-A- 4 749 619

## Beschreibung

### Stand der Technik

Die Erfindung betrifft ein Verfahren zur Herstellung einer Membran nach Anspruchs 1.

Es ist bereits eine Vorrichtung zur Herstellung einer Membran, insbesondere eine Vorrichtung zur Herstellung einer Phaseninversionsmembran, die eine Verfahrensstrecke aufweist, die dazu vorgesehen ist, zur Ausbildung der Membran einen Polymerstrang zu führen, bekannt.

Aus der EP 0 547 471 A1 ist ferner bereits ein Verfahren zur Herstellung einer Phaseninversionsmembran bekannt.

### Vorteile der Erfindung

Die Erfindung schlägt ein Verfahren zur Herstellung einer Phaseninversionsmembran mit zumindest einer Membraninnenfläche und einer Membranaußenfläche vor, wobei zur Ausbildung der Phaseninversionsmembran entlang einer Verfahrensstrecke zumindest ein Polymerstrang geführt wird, wobei der Polymerstrang zur Stauchung und Dehnung entlang der Verfahrensstrecke mit unterschiedlichen Transportgeschwindigkeiten geführt wird, wobei der Polymerstrang mittels zumindest vier Fördereinheiten der Verfahrensstrecke transportiert wird, wobei die zumindest zwei Fördereinheiten entlang der Transportrichtung räumlich getrennt voneinander und nacheinander angeordnet sind, wobei mittels einer Steuer- und Regeleinheit einer Einrichtung Transportgeschwindigkeiten der zumindest zwei Fördereinheiten eingestellt werden, die sich voneinander unterscheiden, wobei der Polymerstrang zur Bereitstellung einer rauen Membraninnenfläche der Phaseninversionsmembran und damit zur Realisierung einer rauen Membranstruktur mittels der Einrichtung gezielt gestaucht und gedehnt wird, sodass eine Verformung des Polymerstrangs entlang einer Längsachse des Polymerstrangs erfolgt, wobei der Polymerstrang zur Stauchung und Dehnung entlang der Verfahrensstrecke mit unterschiedlichen Transportgeschwindigkeiten geführt wird, wobei mittels der Steuer- und Regeleinheit der Einrichtung eine Transportgeschwindigkeitsdifferenz zwischen den zumindest zwei Fördereinheiten von zumindest 1 Prozent und höchstens 5 Prozent eingestellt wird, wobei mittels den Fördereinheiten eine mittlere Transportgeschwindigkeit des Polymerstrangs entlang der Verfahrensstrecke eingestellt wird, die zwischen 0,5 und 5 Zentimeter pro Sekunde liegt, wobei der aus der Spinndüse austretende Polymerstrang zur Entfernung eines Lösungsmittels und damit zur Koagulation mittels vier Fördereinheiten durch vier Fällbäder geführt wird, wodurch entlang der Verfahrensstrecke sich der Polymerstrang zu der Membran bildet und einen festen Zustand annimmt, wobei eine erste Fördereinheit eine Transportgeschwindigkeit aufweist, die im Vergleich zu den anderen drei Transportgeschwindigkeiten der Fördereinheiten am höchsten ausgebildet ist, wobei eine zweite Fördereinheit eine Transportgeschwindigkeit aufweist, die am zweithöchsten ausgebildet ist, wobei eine dritte Fördereinheit eine Transportgeschwindigkeit aufweist, die am zweitkleinsten ausgebildet ist und wobei eine vierte Fördereinheit eine Transportgeschwindigkeit aufweist, die am kleinsten ausgebildet ist.

Durch das Verfahren kann ein Aufrauen bzw. ein teilweises Aufreißen des Polymerstrangs zumindest in einem Teilbereich erreicht werden, dessen Aufraugrad größer als üblich ist, wodurch besonders einfach eine raue Membranoberfläche hergestellt werden kann. Durch das Stauchen und Dehnen des Polymerstrangs während der Ausbildung der Membran kann besonders einfach eine Rautiefe der rauen Membranoberfläche realisiert werden, die höher als üblich ist. Durch die raue Membranoberfläche kann eine tatsächliche Membranoberfläche erhöht werden, wodurch eine Durchflussleistung der Membran erhöht werden kann. Unter "üblich" soll insbesondere im Vergleich zu einer Herstellung ohne ein Stauchen und Dehnen des Polymerstrangs verstanden werden. Unter einer "Verfahrensstrecke" soll insbesondere ein Herstellweg verstanden werden, den der Polymerstrang zur Ausbildung der Membran zurücklegen muss und/oder entlang dem der Polymerstrang extrudiert wird und ein Lösungsmittel aus dem Polymerstrang nach und nach ausfällt. Unter einem "Polymerstrang" soll insbesondere ein kontinuierlich extrudiertes und zusammenhängendes Gebilde verstanden werden, das zumindest ein Polymer aufweist und entlang der Verfahrensstrecke geführt bzw. bewegt wird. Der Polymerstrang ist vorzugsweise fadenförmig ausgebildet. Unter "zu stauchen und/oder zu dehnen" soll insbesondere eine Verformung des Polymerstrangs entlang einer Längsachse des Polymerstrangs und/oder entlang einer Transportrichtung des Polymerstrangs verstanden werden. Unter einer "Transportrichtung" soll insbesondere eine Richtung verstanden werden, in die sich der Polymerstrang bewegt und/oder in die der Polymerstrang extrudiert wird. Vorzugsweise ist die Einrichtung zur zumindest teilweisen elastischen Stauchung und/oder Dehnung des Polymerstrangs vorgesehen. Unter "gezielt" soll in diesem Zusammenhang insbesondere verstanden werden, dass der Polymerstrang gewollt mit einer Kraft beaufschlagt wird, die den Polymerstrang staucht und/oder dehnt. Vorzugsweise wirkt die Kraft, mit der der Polymerstrang zur Stauchung und/oder Dehnung beaufschlagt wird, zumindest teilweise parallel zu der Längsachse des Polymerstrangs und/oder zumindest teilweise parallel zu der Transportrichtung des Polymerstrangs.

Unter einer "Phaseninversionsmembranherstellvorrichtung" soll insbesondere eine Vorrichtung verstanden werden, die dazu vorgesehen ist, die Membran mittels einer Phaseninversion bzw. eines Phaseninversionsverfahrens herzustellen. Vorzugsweise stellt die Phaseninversionsmembranherstellvorrichtung die Membran nicht durch ein Schäumen und/oder durch eine Sinterung und/oder durch eine Reckung und/oder durch eine Kernspurtechnik und/oder durch ein elektrochemisches Ätzen her. Unter einer "Rauheit" soll insbesondere eine Gestaltabweichung einer Oberfläche verstanden werden, die vorzugsweise einer Gestaltabweichung dritter bis fünfter Ordnung nach DIN 4760 entspricht. Unter "vorgesehen" soll insbesondere speziell programmiert, ausgelegt und/oder ausgestattet verstanden werden.

Weiter wird vorgeschlagen, dass die Verfahrensstrecke zumindest zwei Fördereinheiten zur Transportierung des Polymerstrangs aufweist und die Einrichtung dazu vorgesehen ist, Transportgeschwindigkeiten der zumindest zwei Fördereinheiten einzustellen, die sich voneinander unterscheiden. Dadurch kann der Polymerstrang besonders einfach gestaucht und/oder gedehnt werden. Durch die unterschiedlichen Transportgeschwindigkeiten kann mit unterschiedlichen zur Längsachse und zur Transportrichtung parallel wirkenden Kräften auf den Polymerstrang eingewirkt werden, wodurch der Polymerstrang gedehnt und gestaucht wird. Unter einer "Fördereinheit" soll insbesondere ein Antrieb verstanden werden, der dazu vorgesehen ist, eine auf den Polymerstrang wirkende Kraft zur Bewegung des Polymerstrangs bereitzustellen, die eine Transportrichtung und damit eine Bewegungsrichtung des Polymerstrangs definiert. Unter einer "Transportgeschwindigkeit" soll insbesondere eine Geschwindigkeit verstanden werden, mittels deren der zumindest eine Polymerstrang von einer Fördereinheit befördert wird.

Ferner wird vorgeschlagen, dass die Verfahrensstrecke zumindest drei Fördereinheiten zur Transportierung des Polymerstrangs aufweist und dass die Einrichtung dazu vorgesehen ist, Transportgeschwindigkeiten der zumindest drei Fördereinheiten einzustellen, die sich voneinander unterscheiden. Dadurch kann eine besonders vorteilhafte Stauchung und/oder Dehnung des Polymerstrangs realisiert werden.

Insbesondere ist es vorteilhaft, wenn die Einrichtung dazu vorgesehen ist, zeitlich konstante unterschiedliche Transportgeschwindigkeiten einzustellen. Dadurch kann eine besonders vorteilhafte Führung des Polymerstrangs realisiert werden, bei der insbesondere eine gleichmäßige Stauchung und/oder Dehnung des Polymerstrangs erreicht werden kann.

Erfindungsgemäß ist die Einrichtung dazu vorgesehen, eine Transportgeschwindigkeitsdifferenz zwischen den zumindest zwei Fördereinheiten von zumindest 1 Prozent einzustellen. Dadurch kann ein besonders vorteilhafter Unterschied zwischen den zumindest zwei Transportgeschwindigkeiten gefunden werden. Unter einer "Transportgeschwindigkeitsdifferenz" soll insbesondere eine Abweichung zwischen den zumindest zwei unterschiedlichen Transportgeschwindigkeiten verstanden werden. Vorzugsweise wird bei einer prozentualen Transportgeschwindigkeitsdifferenz von einer kleinsten Transportgeschwindigkeit als Grundwert ausgegangen, wobei die prozentuale Transportgeschwindigkeitsdifferenz einer Abweichung von dem Grundwert entspricht.

Erfindungsgemäß ist die Einrichtung dazu vorgesehen, eine Transportgeschwindigkeitsdifferenz zwischen den zumindest zwei Fördereinheiten von höchstens 5 Prozent einzustellen. Dadurch kann eine Beschädigung des Polymerstrangs vermieden werden.

Erfindungsgemäß weist die Membranherstellvorrichtung zumindest zwei Fällbäder auf, aufweist, durch die die Verfahrensstrecke zumindest teilweise verläuft, wodurch ein Ausfällen eines Lösungsmittels und damit eine Ausbildung der Membran realisiert werden kann. Insbesondere ist es vorteilhaft, wenn die Einrichtung dazu vorgesehen ist, zur Stauchung und/oder zur Dehnung des Polymerstrangs zumindest zwei unterschiedliche Fällbadtemperaturen einzustellen. Dadurch kann vorteilhaft eine auf den Polymerstrang wirkende Temperaturdifferenz realisiert werden, wodurch die Stauchung und/oder die Dehnung des Polymerstrangs verbessert werden können.

Weiter ist es vorteilhaft, wenn zumindest ein Fällbad zur Stauchung und/oder zur Dehnung des Polymerstrangs eine Fällbadtiefe von zumindest 0,5 Meter aufweist. Durch die Führung des Polymerstrangs in der Fällbadtiefe von zumindest 0,5 Meter kann vorteilhaft eine auf den Polymerstrang wirkende Druckdifferenz realisiert werden, wodurch die Stauchung und/oder die Dehnung des Polymerstrangs weiter verbessert werden kann. Vorteilhafterweise weist das zumindest eine Fällbad zur Stauchung und/oder Dehnung eine Fällbadtiefe von zumindest 1 Meter, besonders vorteilhaft von zumindest 1,5 Meter und ganz besonders vorteilhaft von zumindest 2 Meter auf.

Ferner ist es vorteilhaft, wenn das zumindest eine Fällbad mit der Fallbadtiefe von zumindest 0,5 Meter bezüglich der Transportrichtung des Polymerstrangs als erstes Fällbad ausgebildet ist Dadurch kann die auf den Polymerstrang wirkende Druckdifferenz besonders effektiv genutzt werden Unter einem "bezüglich einer Transportrichtung des Polymerstrangs als erstes Fällbad ausgebildeten Fallbad" soll insbesondere verstanden werden, dass das Fällbad bezüglich der Transportrichtung vor dem zumindest einen weiteren Fällbad angeordnet ist und/oder dass der Polymerstrang nach einer Extrusion als erstes durch dieses Fällbad geführt wird. Die Bezeichnung "erste" soll in diesem Zusammenhang insbesondere eine Reihenfolge kennzeichnen, nach der der Polymerstrang durch die zumindest zwei Fällbäder geführt wird, wobei ein erstes Fallbad das Fallbad ist, durch das der Polymerstrang als erstes geführt wird

In einer vorteilhaften Ausgestaltung ist die Einrichtung zur Stauchung und/oder zur Dehnung des Polymerstrangs dazu vorgesehen, eine Innenfluidtemperatur und eine Polymerstrangtemperatur einzustellen, die sich voneinander unterscheiden. Dadurch kann vorteilhaft eine weitere auf den Polymerstrang wirkende Temperaturdifferenz realisiert werden, wodurch die Stauchung und/oder die Dehnung des Polymerstrangs weiter verbessert werden können Vorzugsweise ist die Einrichtung zur Stauchung und/oder zur Dehnung des Polymerstrangs dazu vorgesehen, eine Innenfluidtemperatur einzustellen, die kleiner ist als die Polymerstrangtemperatur. Besonders bevorzugt ist die Einrichtung zur Stauchung und/oder zur Dehnung des Polymerstrangs dazu vorgesehen, einen Innenfluiddruck und einen Polymerstrangdruck einzustellen, die sich voneinander unterscheiden Dadurch kann vorteilhaft eine weitere auf den Polymerstrang wirkende Druckdifferenz realisiert werden, wodurch die Stauchung und/oder die Dehnung des Polymerstrangs weiter verbessert werden können.

Durch das erfindungsgemäße Verfahren kann besonders einfach, insbesondere durch Einstellung von Verfahrensparametern eine raue Membranoberfläche hergestellt werden.

Erfindungsgemäß wird die Membran in dem Verfahren durch eine Phaseninversion hergestellt bzw. gebildet. Das Verfahren ist vorteilhafterweise zur Herstellung einer Hohlfasermembran vorgesehen.

Erfindungsgemäß wird der Polymerstrang zur Stauchung und/oder Dehnung entlang der Verfahrensstrecke mit unterschiedlichen Transportgeschwindigkeiter geführt.

Dadurch kann eine besonders vorteilhafte und effektive Stauchung und/oder Dehnung realisiert werden.

Es ist denkbar, dass zumindest die Membraninnenflache einer Membran wenigstens in einem Teilbereich eine Rautiefe von 500 Nanometer bis 5 Mikrometer aufweist Dadurch kann eine tatsächliche bzw. wirksame Membranoberflache, die mit einem Medium überströmt wird, vergrößert werden, wodurch eine Durchflussleistung und/oder eine Trennleistung der Membran erhöht werden kann. Durch eine raue Membraninnenflache kann eine Turbulenz des überströmten Mediums an der Membraninnenfläche erhöht werden, wodurch eine nachteilige Ablagerung von Inhaltsstoffen des Mediums und damit eine Reduzierung einer wirksamen Membraninnenflache vermieden werden kann Vorzugsweise ist die Membraninnenfläche wenigstens im oberflachennahen Bereich rau mit einer Rautiefe von 500 Nanometer bis 5 Mikrometer ausgebildet Vorteilhafterweise ist die Rautiefe mittels eines optischen Messsystems, insbesondere mittels REM-Mikroskopie, gemessen Die Messung der Rautiefe erfolgt vorteilhafterweise nach DIN 4768 Die Rautiefe entspricht vorzugsweise einer gemittelten Rautiefe. Vorzugsweise sind durch die Rautiefe durchschnittliche Höhenunterschiede der Membranoberfläche erfasst. Vorteilhafterweise ist die Membran keine Flachmembran. Unter einer "Phaseninversionsmembran" soll soll insbesondere eine Membran verstanden werden, die durch ein Phaseninversionsverfahren hergestellt ist. Vorzugsweise ist die als Phaseninversionsmembran ausgebildete Membran nicht durch ein Schäumen und/oder durch eine Sinterung und/oder durch eine Reckung und/oder durch eine Kernspurtechnik und/oder durch ein elektrochemisches Ätzen hergestellt. Die als Phaseninversionsmembran hergestellte Membran ist vorteilhafterweise aus einem synthetischen Polymermaterial hergestellt.

Ferner wird vorgeschlagen, dass die Membranaußenflöche wenigstens in einem Teilbereich eine Rautiefe aufweist, die sich von der Rautiefe der Membraninnenfläche unterscheidet. Dadurch kann eine besonders vorteilhafte Membran bereitgestellt werden. Vorzugsweise weist die Membranaußenfläche wenigstens in einem Teilbereich eine Rautiefe auf, die kleiner ist als die Rautiefe der Membraninnenfläche.

Weiter ist vorteilhaft, wenn die Membraninnenfläche an einer trennaktiven Schicht angeordnet ist. Dadurch kann die Trennleistung der Membran weiter erhöht werden. Die trennaktive Schicht ist vorteilhafterweise als eine filtrationsaktive Schicht ausgebildet. Unter einer "trennaktiven Schicht" soll insbesondere eine Schicht verstanden werden, die in Bezug auf ein Durchdringen einen Widerstand für zumindest eine erste Komponente insbesondere einer Flüssigkeit darstellt. Vorteilhafterweise stellt die trennaktive Schicht für zumindest eine zweite Komponente der Flüssigkeit zumindest im Wesentlichen keinen Widerstand bezüglich des Durchdringens dar. Die trennaktive Schicht lässt vorzugsweise unterschiedliche Komponenten insbesondere einer Flüssigkeit unterschiedlich gut passieren. Unter einer " ersten Komponente" soll in diesem Zusammenhang insbesondere eine Komponente verstanden werden, die aus einer Flüssigkeit herausgefiltert werden soll bzw. herausgefiltert wird, wie beispielsweise Partikel und/oder Mikroorganismen. Vorzugsweise selektiert die trennaktive Schicht die Komponenten nach Teilchengröße voneinander.

Weiter wird ein Bioreaktor vorgeschlagen, der zumindest eine erfindungsgemäße Membran aufweist. Dadurch kann ein Bioreaktor bereitgestellt werden, mittels dessen besonders vorteilhaft Bakterien gezüchtet werden können. Unter einem "Bioreaktor" soll insbesondere eine Einheit verstanden werden, in der Mikroorganismen, insbesondere Bakterien, kultiviert bzw. fermentiert und damit gezüchtet werden. Vorzugsweise ist die erfindungsgemäße Membran zur Immobilisierung von Mikroorganismen, insbesondere von Bakterien vorgesehen. Vorzugsweise können in dem Bioreaktor auch Zellen oder kleine Pflanzen kultiviert werden. Vorteilhafterweise befinden sich die Mikroorganismen auf der Membranaußenfläche und ein Nährmittel für die Mikroorganismen auf der Membraninnenfläche. Die Mikroorganismen und das Nährmittel sind vorteilhafterweise durch eine trennaktive Schicht voneinander getrennt.

### Zeichnungen

Weitere Vorteile ergeben sich aus der folgenden Zeichnungsbeschreibung. In den Zeichnungen ist ein Ausführungsbeispiel einer erfindungsgemäßen Membranherstellvorrichtung, mittels deren eine erfindungsgemäße Membran nach dem erfindungsgemäßen Verfahren hergestellt wird, dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisch eine Membranherstellvorrichtung und
- Fig. 2: schematisch einen Querschnitt einer durch die Membranherstellvorrichtung hergestellten Membran.

### Beschreibung des Ausführungsbeispiels

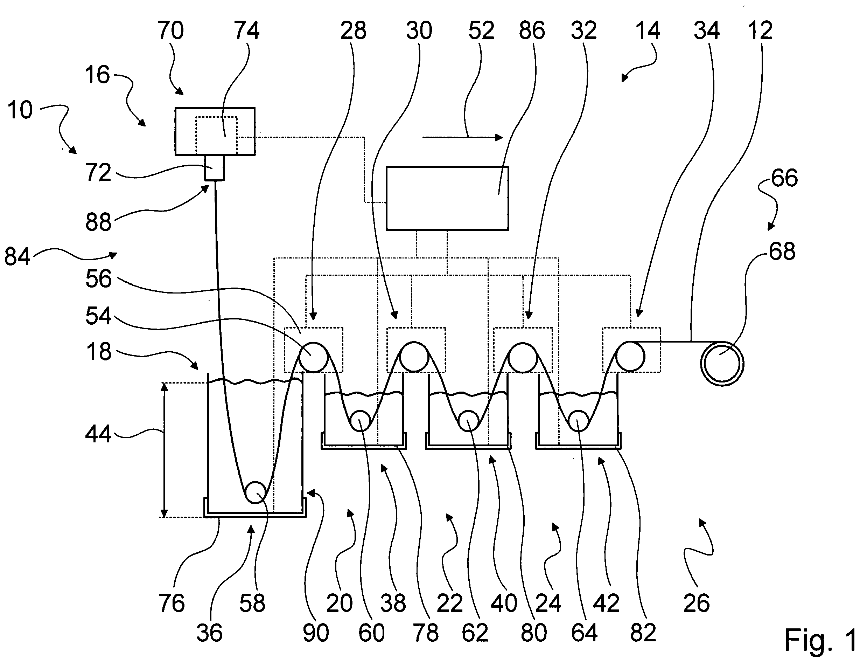

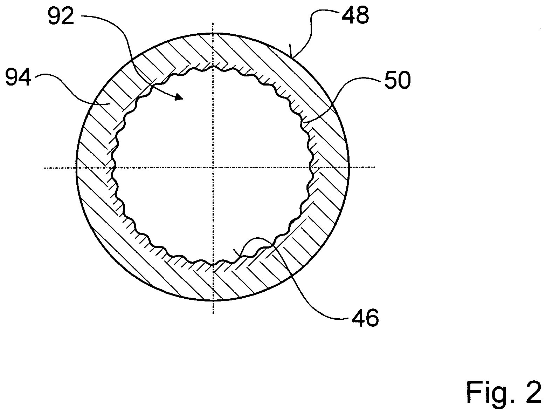

In den Figuren 1 und 2 sind schematisch eine erfindungsgemäße Membranherstellvorrichtung und ein Querschnitt einer durch die Membranherstellvorrichtung hergestellten Membran dargestellt. Die von der Membranherstellvorrichtung hergestellte Membran ist als eine Phaseninversionsmembran ausgebildet. Die Membranherstellvorrichtung ist als eine Phaseninversionsmembranherstellvorrichtung ausgebildet. Die Membranherstellvorrichtung stellt die als Phaseninversionsmembran ausgebildete Membran mittels einer Phaseninversion her. Sie stellt die Membran mittels eines Nassspinnens her. Die Membranherstellvorrichtung ist zur Herstellung einer als Hohlfasermembran ausgebildeten Membran vorgesehen. Sie ist zur Herstellung einer Einkanalmembran vorgesehen. Grundsätzlich kann die Membranherstellvorrichtung auch zur Herstellung einer Mehrkanalmembran mit zumindest zwei, insbesondere mit drei Innenkanälen vorgesehen werden.

Zur Ausbildung der Membran weist die Membranherstellvorrichtung eine Verfahrensstrecke 10 auf, die einen Polymerstrang 12 führt. Entlang der Verfahrensstrecke 10 wird der Polymerstrang 12 extrudiert, koaguliert und fixiert, wodurch die Membran ausgebildet ist. Der Polymerstrang 12 nimmt entlang der Verfahrensstrecke 10 einen flüssigen Zustand und einen festen Zustand an. Er weist entlang der Verfahrensstrecke 10 verschiedene Viskositäten auf. Die Verfahrensstrecke 10 ist für ein Urformen vorgesehen. Sie ist als eine Herstellstrecke der Membran ausgebildet.

Zur Transportierung und zur Führung des Polymerstrangs 12 weist die Verfahrensstrecke 10 vier Fördereinheiten 28, 30, 32, 34 auf, die eine Transportrichtung 52 des Polymerstrangs 12 einstellen. Die erste Fördereinheit 28, die zweite Fördereinheit 30, die dritte Fördereinheit 32 und die vierte Fördereinheit 34 wirken jeweils mit einer Zugkraft auf den Polymerstrang 12, wodurch der Polymerstrang 12 in die Transportrichtung 52 bewegt wird. Die Fördereinheiten 28, 30, 32, 34 ziehen jeweils den Polymerstrang 12. Die Fördereinheiten 28, 30, 32, 34 sind jeweils unabhängig voneinander einstellbar. Sie sind unsynchronisiert.

Die Fördereinheiten 28, 30, 32, 34 sind entlang der Transportrichtung 52 räumlich getrennt voneinander angeordnet. Sie sind entlang der Transportrichtung 52 nacheinander angeordnet. Die erste Fördereinheit 28 ist bezüglich der Transportrichtung 52 des Polymerstrangs 12 vor der zweiten Fördereinheit 30, die zweite Fördereinheit 30 vor der dritten Fördereinheit 32 und die dritte Fördereinheit 32 vor der vierten Fördereinheit 34 angeordnet. Die Bezeichnung bzw. Kennzeichnung der Fördereinheiten 28, 30, 32, 34 entspricht entlang der Transportrichtung 52 einer Reihenfolge der hintereinander angeordneten Fördereinheiten 28, 30, 32, 34 und somit einer Reihenfolge, mit der der Polymerstrang 12 mit den einzelnen Fördereinheiten 28, 30, 32, 34 in Kontakt kommt. Die erste Fördereinheit 28 ist anfangsseitig der Verfahrensstrecke 10 angeordnet. Die vierte Fördereinheit 34 ist an einem Ende der Verfahrensstrecke 10 angeordnet. Sie ist als eine letzte Fördereinheit ausgebildet. Die vierte Fördereinheit 34 definiert das Ende der Verfahrensstrecke 10. Der Polymerstrang 12 weist am Ende der Verfahrensstrecke 10 einen festen Zustand auf.

Die vier Fördereinheiten 28, 30, 32, 34 sind jeweils analog ausgebildet, weshalb lediglich die erste Fördereinheit 28 näher beschrieben wird. Die Fördereinheit 28 weist eine Antriebsrolle 54, einen Antriebsmotor 56 und eine nicht dargestellte Antriebswelle auf. Die Antriebswelle koppelt die Antriebsrolle 54 mit dem Antriebsmotor 56. Der Antriebsmotor 56 treibt die Antriebsrolle 54 mittels der Antriebswelle an. Die von der Antriebswelle angetriebene Antriebsrolle 54 stellt eine Transportgeschwindigkeit des Polymerstrangs 12 in einem Teilbereich 20 der Verfahrensstrecke 10 ein. Die Antriebsrolle 54 transportiert den Polymerstrang 12 mit der Transportgeschwindigkeit. Die Transportgeschwindigkeit resultiert aus einer Rotationsgeschwindigkeit der Antriebswelle und damit der Antriebsrolle 54 und einem Radius der Antriebsrolle 54. Die Antriebsrolle 54 steht mit dem Polymerstrang 12 in Kontakt. Sie wirkt mit einer Zugkraft auf den Polymerstrang 12 ein. Die Antriebsrolle 54 lenkt den Polymerstrang 12 um. Der Polymerstrang 12 liegt teilweise auf der Antriebsrolle 54. Der Antriebsmotor 56 ist als ein Elektromotor ausgebildet.

Die Fördereinheit 30 stellt eine Transportgeschwindigkeit des Polymerstrangs 12 in einem Teilbereich 22 der Verfahrensstrecke 10, die Fördereinheit 32 eine Transportgeschwindigkeit des Polymerstrangs 12 in einem Teilbereich 24 und die Fördereinheit 34 eine Transportgeschwindigkeit des Polymerstrangs 12 in einem Teilbereich 26 der Verfahrensstrecke 10 ein. Die Fördereinheiten 28, 30, 32, 34 stellen zusammen eine mittlere Transportgeschwindigkeit des Polymerstrangs 12 entlang der Verfahrensstrecke 10 ein. Die mittlere Transportgeschwindigkeit liegt zwischen 1 und 5 Zentimeter pro Sekunde und vorteilhaft zwischen 1 und 3 Zentimeter pro Sekunde. In diesem Ausführungsbeispiel stellen die Fördereinheiten 28, 30, 32, 34 eine mittlere Transportgeschwindigkeit von 2 Zentimeter pro Sekunde ein. Grundsätzlich können die Fördereinheiten 28, 30, 32, 34 auch auf eine andere, dem Fachmann als sinnvoll erscheinende Art und Weise ausgebildet werden.

Zur weiteren Umlenkung des Polymerstrangs 12 weist die Verfahrensstrecke 10 vier Umlenkrollen 58, 60, 62, 64 auf. Die erste Umlenkrolle 58 ist bezüglich der Transportrichtung 52 des Polymerstrangs 12 vor der ersten Fördereinheit 28 angeordnet. Die zweite Umlenkrolle 60 ist entlang der Transportrichtung 52 zwischen der ersten Fördereinheit 28 und der zweiten Fördereinheit 30, die dritte Umlenkrolle 62 zwischen der zweiten Fördereinheit 30 und der dritten Fördereinheit 34 und die vierte Umlenkrolle 64 zwischen der dritten Fördereinheit 32 und der vierten Fördereinheit 34 angeordnet. Die Umlenkrollen 58, 60, 62, 64 sind jeweils unangetrieben.

Zur Aufwicklung des Polymerstrangs 12 weist die Membranherstellvorrichtung eine Aufwickeleinheit 66 mit zumindest einer Aufwickelrolle 68 auf. Die Aufwickeleinheit 66 ist zur Aufwicklung der ausgebildeten Membran nach Verlassen der Verfahrensstrecke 10 vorgesehen. Sie wickelt den als Membran ausgebildeten Polymerstrang 12 vor einem Nachbearbeitungsvorgang auf. Die Aufwickeleinheit 66 ist hinter der Verfahrensstrecke 10 angeordnet. Entlang der Transportrichtung 52 des Polymerstrangs 12 ist die Aufwickeleinheit 66 direkt hinter den vier Fördereinheiten 28, 30, 32, 34 angeordnet. Die Aufwickelrolle 68 der Aufwickeleinheit 66 ist als eine Spule ausgebildet.

Zur Extrusion des Polymerstrangs 12 weist die Verfahrensstrecke 10 eine Spinndüseneinheit 70 mit zumindest einer Spinndüse 72 auf. Die Spinndüseneinheit 70 ist an einem Anfang der Verfahrensstrecke 10 angeordnet. Die Spinndüseneinheit 70 ist zur Führung eines Innenfluids und des in einem teilweise flüssigen Zustand befindlichen Polymerstrangs 12 vorgesehen, wobei das Innenfluid innerhalb des Polymerstrangs 12 geführt wird. Der Polymerstrang 12 ist am Anfang der Verfahrensstrecke 10 als eine Polymerlösung ausgebildet. Der Polymerstrang 12 weist ein Lösungsmittel auf, in dem ein Polymer gelöst ist. Als Lösungsmittel wird dabei N-Methyl-2-Pyrrolidon verwendet, das entlang der Verfahrensstrecke 10 ausfällt. Der zunächst als Polymerlösung ausgebildete Polymerstrang 12 besteht aus Polyethersulfon, N-Methyl-2-Pyrrolidon und Polyvinylpyrrolidon. Das Innenfluid ist als Wasser ausgebildet.

Der Polymerstrang 12 wird durch die Spinndüse 72 extrudiert. Der Polymerstrang 12 verlässt die Spinndüse 72 mit dem Innenfluid in einen Spinndüsenausgangsbereich 84. Der Polymerstrang 12 weist in dem Spinndüsenausgangsbereich 84 einen teilweise flüssigen Zustand auf. Er verlässt die Spinndüse 72 in einem honigartigen Zustand. Der Polymerstrang 12 weist am Anfang der Verfahrensstrecke 10 einen teilweise flüssigen bzw. honigartigen Zustand auf. Der Spinndüsenausgangsbereich 84 ist als eine Umgebung mit einem Umgebungsdruck ausgebildet.

Die Spinndüseneinheit 70 ist weiter zu einer Einstellung bzw. zu einer Veränderung von zumindest einem Parameter des Innenfluids und des als Polymerlösung ausgebildeten Polymerstrangs 12 vorgesehen. Zur Einstellung einer Innenfluidtemperatur, eines Innenfluiddrucks, einer Polymerstrangtemperatur und eines Polymerstrangdrucks weist die Spinndüseneinheit 70 eine Temperatur- und Druckeinstelleinheit 74 auf. Grundsätzlich können die Temperatureinheit und die Druckeinstelleinheit auch getrennt voneinander ausgeführt und/oder außerhalb der Spinndüseneinheit 70 angeordnet sein

Zur Entfernung des Lösungsmittels aus dem Polymerstrang 12 und damit zur Fällung weist die Membranherstellvorrichtung vier Fällbäder 36, 38, 40, 42 auf. Das Lösungsmittel wird zur Ausbildung der Membran entlang der Verfahrensstrecke 10 entfernt. Die Entfernung des Lösungsmittels erfolgt durch eine Tauchfällung. Der Polymerstrang 12 wird entlang der Verfahrensstrecke 10 durch die vier Fällbäder 36, 38, 40, 42 geführt. Die Fällbäder 36, 38, 40, 42 sind zur Koagulierung vorgesehen. Das erste Fällbad 36, das zweite Fällbad 38, das dritte Fällbad 40 und das vierte Fällbad 42 sind entlang der Transportrichtung 52 nacheinander angeordnet. Sie sind räumlich getrennt voneinander angeordnet. Die Bezeichnung bzw. die Kennzeichnung der Fällbäder 36, 38, 40, 42 entspricht entlang der Transportrichtung 52 einer Reihenfolge der nacheinander angeordneten Fällbäder 36, 38, 40, 42 und somit einer Reihenfolge, in der der Polymerstrang 12 durch die einzelnen Fällbäder 36, 38, 40, 42 geführt wird.

Das erste Fällbad 36 ist direkt nach dem Spinndüsenausgangsbereich 84 angeordnet. Der Spinndüsenausgangsbereich 84 ist somit zwischen der Spinndüseneinheit 70 und dem ersten Fällbad 36 angeordnet. Der die Spinndüse 72 verlassende Polymerstrang 12 wird entlang der Verfahrensstrecke 10 zuerst durch das erste Fällbad 36, dann durch das zweite Fällbad 38, dann durch das dritte Fällbad 40 und anschließend durch das vierte Fällbad 42 geführt. Das erste Fällbad 36 ist anfangsseitig der Verfahrensstrecke 10 angeordnet. Das vierte Fällbad 42 ist endseitig der Verfahrensstrecke 10 angeordnet.

Das erste Fällbad 36 ist bezüglich der Transportrichtung 52 des Polymerstrangs 12 vor der ersten Fördereinheit 28 angeordnet. Das zweite Fällbad 38 ist entlang der Transportrichtung 52 zwischen der ersten Fördereinheit 28 und der zweiten Fördereinheit 30, das dritte Fällbad 40 ist zwischen der zweiten Fördereinheit 30 und der dritten Fördereinheit 32 und das vierte Fällbad 42 ist zwischen der dritten Fördereinheit 32 und der vierten Fördereinheit 34 angeordnet. In jeweils einem der Fällbäder 36, 38, 40, 42 ist jeweils eine Umlenkrolle 58, 60, 62, 64 angeordnet.

Die Fällbäder 36, 38, 40, 42 sind jeweils mit einem Fällmittel gefüllt. Das Fällmittel jedes Fällbads 36, 38, 40, 42 ist gleich. Das Fällmittel ist jeweils als Wasser ausgebildet. Grundsätzlich kann das Fällmittel auch als ein anderes, dem Fachmann als sinnvoll erscheinendes Fällmittel ausgebildet werden und/oder sich von Fällbad zu Fällbad unterscheiden.

Zur Einstellung einer Fällbadtemperatur weist die Membranherstellvorrichtung vier Heizeinheiten 76, 78, 80, 82 auf, die jeweils einem der Fällbäder 36, 38, 40, 42 zugeordnet sind. Die Heizeinheiten 76, 78, 80, 82 sind zur Erhöhung der entsprechenden Fällbadtemperatur vorgesehen.

Zur Bereitstellung einer rauen Membraninnenfläche 46 der Membran und damit zur Realisierung einer rauen Membranstruktur weist die Membranherstellvorrichtung eine Einrichtung 14 auf, die den Polymerstrang 12 während der Herstellung der Membran gezielt staucht und dehnt. Die Einrichtung 14 staucht und dehnt den Polymerstrang 12 während der Ausbildung der Membran. Sie staucht und dehnt den Polymerstrang 12 während einem Extrusionsvorgang und während einem Ausfällungsvorgang. Die Einrichtung 14 ist zur Stauchung und zur Dehnung des Polymerstrangs 12 vor einem Nachbehandlungsvorgang, d.h. während einem Urformen vorgesehen.

Die Einrichtung 14 ist zur Stauchung und zur Dehnung des Polymerstrangs 12 in Teilbereichen 16, 18, 20, 22, 24, 26 der Verfahrensstrecke 10 vorgesehen. Die Einrichtung 14 verformt den Polymerstrang 12 in den Teilbereichen 16, 18, 20, 22, 24, 26 der Verfahrensstrecke 10 entlang einer Längsachse des Polymerstrangs 12.

Die Einrichtung 14 ist dazu vorgesehen, die Transportgeschwindigkeit von jeder der vier Fördereinheiten 28, 30, 32, 34 unabhängig voneinander einzustellen. Weiter ist die Einrichtung 14 zur Einstellung der Innenfluidtemperatur, des Innenfluiddrucks, der Polymerstrangtemperatur und des Polymerstrangdrucks in der Spinndüseneinheit 70 vorgesehen. Außerdem ist die Einrichtung 14 zur Einstellung der Fällbadtemperatur der Fällbäder 36, 38, 40, 42 und zur Einstellung einer Temperatur in dem Spinndüsenausgangsbereich 84 vorgesehen.

Die Einrichtung 14 weist eine Steuer- und Regeleinheit 86 auf, die zur Steuerung und Regelung unter anderem der vier Fördereinheiten 28, 30, 32, 34, der Spinndüseneinheit 70, der Fällbadtemperaturen der Fällbäder 36, 38, 40, 42 und der Temperatur in dem Spinndüsenausgangsbereich 84 vorgesehen ist. Die Steuer- und Regeleinheit 86 ist an die Fördereinheiten 28, 30, 32, 34, an die Spinndüseneinheit 70, insbesondere an die Temperatur- und Druckeinstelleinheit 74 der Spinndüseneinheit 70 und an die Heizeinheiten 76, 78, 80, 82 kommunizierend angebunden. Die Steuer- und Regeleinheit 86 umfasst zumindest eine Prozessoreinheit und eine Speichereinheit sowie ein in der Speichereinheit gespeichertes Betriebsprogramm.

Die Steuer- und Regeleinheit 86 bildet eine Bedieneinheit aus, mittels deren ein Bediener mehrere Parameter der Membranherstellvorrichtung manuell einstellen oder ein Betriebsprogramm wählen und starten bzw. beenden kann. Der Bediener kann mittels der Bedieneinheit unter anderem die Transportgeschwindigkeit von jeder der vier Fördereinheiten 28, 30, 32, 34 unabhängig voneinander einstellen. Weiter kann der Bediener mittels der Bedieneinheit jeweils die Innenfluidtemperatur, den Innenfluiddruck, die Polymerstrangtemperatur und den Polymerstrangdruck in der Spinndüseneinheit 70 einstellen. Außerdem kann der Bediener mittels der Bedieneinheit die Fällbadtemperaturen aller Fällbäder 36, 38, 40, 42 unabhängig voneinander und die Temperatur des Spinndüsenausgangsbereichs 84 einstellen. Durch Auswahl und Starten eines Betriebsprogramms kann der Bediener über die Bedieneinheit vorprogrammierte Parameter einstellen. Grundsätzlich können die Steuer- und Regeleinheit 86 und die Bedieneinheit auch separat voneinander ausgebildet sein.

Die Steuer- und Regeleinheit 86 der Einrichtung 14 ist dazu vorgesehen, unterschiedliche Transportgeschwindigkeiten der vier Fördereinheiten 28, 30, 32, 34 einzustellen. Die Einrichtung 14 ist zur Einstellung von einer Transportgeschwindigkeitsdifferenz zwischen jeweils zwei Fördereinheiten 28, 30, 32, 34 vorgesehen. Sie ist zur Dehnung und Stauchung des Polymerstrangs 12 dazu vorgesehen, eine Transportgeschwindigkeitsdifferenz zwischen jeweils zwei benachbarten Fördereinheiten 28, 30, 32, 34 einzustellen.

Die Einrichtung 14 stellt zur Dehnung und Stauchung des Polymerstrangs 12 jeweils eine Transportgeschwindigkeit der vier Fördereinheiten 28, 30, 32, 34 ein, die sich jeweils von den Transportgeschwindigkeiten der anderen Fördereinheiten 28, 30, 32, 34 unterscheidet. Keine der Transportgeschwindigkeiten einer Fördereinheit 28, 30, 32, 34 entspricht einer Transportgeschwindigkeit einer anderen Fördereinheit 28, 30, 32, 34. Die Steuer- und Regeleinheit 86 stellt zwischen den jeweiligen Fördereinheiten 28, 30, 32, 34 jeweils eine Transportgeschwindigkeitsdifferenz ein, wobei die Transportgeschwindigkeitsdifferenzen sich jeweils voneinander unterscheiden.

Die Steuer- und Regeleinheit 86 der Einrichtung 14 ist dazu vorgesehen, zeitlich konstante unterschiedliche Transportgeschwindigkeiten zwischen den Fördereinheiten 28, 30, 32, 34 einzustellen. Während einem Betrieb ändern sich die Transportgeschwindigkeiten der einzelnen Fördereinheiten 28, 30, 32, 34 nicht. Grundsätzlich kann die Einrichtung 14 bzw. die Steuer- und Regeleinheit 86 der Einrichtung 14 aber auch dazu vorgesehen werden, die unterschiedlichen Transportgeschwindigkeiten der Fördereinheiten 28, 30, 32, 34 zeitweise und damit für bestimmte Zeitintervalle einzustellen.

Die Steuer- und Regeleinheit 86 der Einrichtung 14 ist dazu vorgesehen, durch die Einstellung der Transportgeschwindigkeitsdifferenz zwischen der ersten Fördereinheit 28 und der zweiten Fördereinheit 30 den Polymerstrang 12 in den Teilbereichen 20, 22 der Verfahrensstrecke 10, durch die Einstellung der Transportgeschwindigkeitsdifferenz zwischen der zweiten Fördereinheit 30 und der dritten Fördereinheit 32 den Polymerstrang 12 in den Teilbereichen 22, 24 der Verfahrensstrecke 10 und durch die Einstellung der Transportgeschwindigkeitsdifferenz zwischen der dritten Fördereinheit 32 und der vierten Fördereinheit 34 den Polymerstrang 12 in den Teilbereichen 24, 26 der Verfahrensstrecke 10 zu stauchen und zu dehnen. Die Transportgeschwindigkeitsdifferenz zwischen den zwei benachbarten Fördereinheiten 28, 30, die Transportgeschwindigkeitsdifferenz zwischen den zwei benachbarten Fördereinheiten 30, 32 und die Transportgeschwindigkeitsdifferenz zwischen den zwei benachbarten Fördereinheiten 32, 34 unterscheiden sich voneinander.

In diesem Ausführungsbeispiel ist die Transportgeschwindigkeitsdifferenz zwischen der ersten Fördereinheit 28 und der zweiten Fördereinheit 30 im Vergleich zu den Transportgeschwindigkeitsdifferenzen zwischen den restlichen Fördereinheiten 30, 32, 34 am höchsten ausgebildet. Die Transportgeschwindigkeitsdifferenz zwischen der dritten Fördereinheit 32 und der vierten Fördereinheit 34 ist am kleinsten ausgebildet. Grundsätzlich können die Transportgeschwindigkeitsdifferenzen im Vergleich zu den anderen Transportgeschwindigkeitsdifferenzen auch anders ausgebildet oder aber auch gleich sein. Die Steuer- und Regeleinheit 86 ist zur Einstellung einer Transportgeschwindigkeitsdifferenz zwischen zwei Fördereinheiten 28, 30, 32, 34 von zumindest 1 Prozent und höchstens 5 Prozent vorgesehen. Die Transportgeschwindigkeitsdifferenzen zwischen zwei Fördereinheiten 28, 30, 32, 34, insbesondere zwischen zwei benachbarten Fördereinheiten 28, 30, 32, 34, betragen in diesem Ausführungsbeispiel 2 - 3 Prozent, wobei jeweils die kleinste Transportgeschwindigkeit von den zwei betrachteten Fördereinheiten 28, 30, 32, 34 den Grundwert zur Berechnung der prozentualen Transportgeschwindigkeitsdifferenz bildet.

Durch eine Einstellung der verschiedenen Transportgeschwindigkeiten bzw. der Transportgeschwindigkeitsdifferenzen staucht und dehnt die Einrichtung 14 den Polymerstrang 12 in den Teilbereichen 20 ,22, 24, 26 der Verfahrensstrecke 10. Die Einrichtung 14 beschleunigt und bremst den Polymerstrang 12 während einer Ausfällung des Lösungsmittels und damit während der Ausbildung der Membran. Die Einrichtung 14 ist zur Stauchung und Dehnung des Polymerstrangs 12 dazu vorgesehen, den Polymerstrang 12 entlang der Verfahrensstrecke 10 beabstandet mit unterschiedlichen Zugkräften zu beaufschlagen.

Die unterschiedlichen Transportgeschwindigkeiten der vier Fördereinheiten 28, 30, 32, 34 und damit die Transportgeschwindigkeitsdifferenzen können grundsätzlich auf verschiedenste Art und Weise kombiniert bzw. gewählt werden. Erfindungsgemäß weist die erste Fördereinheit 28 eine Transportgeschwindigkeit auf, die im Vergleich zu den anderen drei Transportgeschwindigkeiten der Fördereinheiten 30, 32, 34 am höchsten, die zweite Fördereinheit 30 kann eine Transportgeschwindigkeit aufweisen, die am zweithöchsten, die dritte Fördereinheit 32 kann eine Transportgeschwindigkeit aufweisen, die am zweitkleinsten und die vierte Fördereinheit 34 kann eine Transportgeschwindigkeit aufweisen, die am kleinsten ausgebildet ist. Grundsätzlich ist es auch denkbar, dass die Einrichtung 14 dazu vorgesehen ist, die Transportgeschwindigkeiten der Fördereinheiten 28, 30, 32, 34 teilweise gleich einzustellen. Dabei kann beispielsweise die Transportgeschwindigkeit der ersten Fördereinheit 28 und der dritten Fördereinheit 32 gleich sein und die Transportgeschwindigkeit der zweiten Fördereinheit 30 und der vierten Fördereinheit 34 kann gleich sein, wobei sich die Transportgeschwindigkeiten der Fördereinheiten 28, 32 von den Transportgeschwindigkeiten der Fördereinheiten 30, 34 unterscheiden. Weiter ist es denkbar, dass die Einrichtung 14 Transportgeschwindigkeiten der beiden ersten Fördereinheiten 28, 30 einstellt, die unterschiedlich zueinander ausgebildet sind, und Transportgeschwindigkeiten der beiden letzten Fördereinheiten 32, 34 einstellt, die gleich ausgebildet sind. Dabei können die Transportgeschwindigkeiten der beiden letzten Fördereinheiten 32, 34 gleich oder unterschiedlich zu den Transportgeschwindigkeiten der zweiten Fördereinheit 30 ausgebildet sein. Außerdem ist es denkbar, dass die Einrichtung 14 zur Stauchung und Dehnung des Polymerstrangs 12 dazu vorgesehen ist, eine Aufwickelgeschwindigkeit der Aufwickelrolle 68 der Aufwickeleinheit 66 einzustellen, die sich von der Transportgeschwindigkeit der vierten Fördereinheit 34 unterscheidet.

Zur weiteren Stauchung und Dehnung des Polymerstrangs 12 ist die Steuer- und Regeleinheit 86 der Einrichtung 14 dazu vorgesehen, unterschiedliche Fällbadtemperaturen für die vier Fällbäder 36, 38, 40, 42 einzustellen. Die Einrichtung 14 ist zur Einstellung von Fällbadtemperaturen der Fällbäder 36, 38, 40, 42 vorgesehen, die sich jeweils voneinander unterscheiden. Die Einrichtung 14 ist zur Einstellung von einer Fällbadtemperaturdifferenz zwischen jeweils zwei Fällbädern 36, 38, 40, 42 vorgesehen. Sie ist zur Einstellung von einer Fällbadtemperaturdifferenz zwischen jeweils zwei benachbarten Fällbädern 36, 38, 40, 42 vorgesehen.

Die Steuer- und Regeleinheit 86 der Einrichtung 14 ist dazu vorgesehen, durch die Einstellung der Fällbadtemperaturdifferenz zwischen dem ersten Fällbad 36 und der zweiten Fällbad 38 den Polymerstrang 12 in dem Teilbereich 20, durch die Einstellung der Fällbadtemperaturdifferenz zwischen dem zweiten Fällbad 38 und dem dritten Fällbad 40 den Polymerstrang 12 in dem Teilbereich 22 und durch die Einstellung der Fällbadtemperaturdifferenz zwischen dem dritten Fällbad 40 und dem vierten Fällbad 42 den Polymerstrang 12 in dem Teilbereich 24 der Verfahrensstrecke 10 zu stauchen und zu dehnen. Die Fällbadtemperaturdifferenz zwischen den zwei benachbarten Fällbädern 36, 38, die Fällbadtemperaturdifferenz zwischen den zwei benachbarten Fällbädern 38, 40 und die Fällbadtemperaturdifferenz zwischen den zwei benachbarten Fällbädern 40, 42 unterscheiden sich voneinander.

Durch eine Einstellung der verschiedenen Fällbadtemperaturen und damit durch die Einstellung der Fällbadtemperaturdifferenzen staucht und dehnt die Einrichtung 14 den Polymerstrang 12 in den Teilbereichen 20, 22, 24 der Verfahrensstrecke 10. Durch die Einstellung der unterschiedlichen Fällbadtemperaturen der Fällbäder 36, 38, 40, 42 dehnt sich der Polymerstrang 12 aus und schrumpft wieder zusammen, wodurch die Membraninnenfläche 46 aufgeraut wird. Der Polymerstrang 12 dehnt sich aus und schrumpft wieder zusammen während einer Ausfällung des Lösungsmittels und damit während der Ausbildung der Membran. Die Einrichtung 14 ist zur Stauchung und Dehnung des Polymerstrangs 12 dazu vorgesehen, den Polymerstrang 12 entlang der Verfahrensstrecke 10 beabstandet mit unterschiedlichen Fällbadtemperaturen und damit mit Temperaturdifferenzen zu beaufschlagen.

In diesem Ausführungsbeispiel stellt die Einrichtung 14 mittels der Heizeinheit 76 eine Fällbadtemperatur des ersten Fällbads 36 von 15 °C, mittels der Heizeinheit 78 eine Fällbadtemperatur des zweiten Fällbads 38 von 25 °C, mittels der Heizeinheit 80 eine Fällbadtemperatur des dritten Fällbads 40 von 30 °C und mittels der Heizeinheit 82 eine Fällbadtemperatur des vierten Fällbads 42 von 45 °C ein. Somit stellt die Einrichtung 14 zur Stauchung und Dehnung des Polymerstrangs 12 eine Föllbadtemperaturdifferenz zwischen dem ersten Fällbad 36 und dem zweiten Fällbad 38 von 10°C, eine Fällbadtemperaturdifferenz zwischen dem zweiten Fällbad 38 und dem dritten Fällbad 40 von 5 °C und eine Fällbadtemperaturdifferenz zwischen dem dritten Fällbad 40 und dem vierten Fällbad 42 von 15 °C ein.

Weiter ist die Steuer- und Regeleinheit 86 dazu vorgesehen, zur Stauchung und zur Dehnung des Polymerstrangs 12 eine Temperatur in dem Spinndüsenausgangsbereich 84 einzustellen, die sich von der Innenfluidtemperatur und der Polymerstrangtemperatur in der Spinndüseneinheit 70 unterscheidet. Die Steuer- und Regeleinheit 86 ist dazu vorgesehen, eine Temperaturdifferenz zwischen der Polymerstrangtemperatur und der Temperatur in dem Spinndüsenausgangsbereich 84 und eine Temperaturdifferenz zwischen der Temperatur in dem Spinndüsenausgangsbereich 84 und der Fällbadtemperatur des ersten Fällbads 36 einzustellen.

Durch die Einstellung der Temperaturdifferenz zwischen der Polymerstrangtemperatur und der Temperatur in dem Spinndüsenausgangsbereich 84 wird der Polymerstrang 12 in dem Teilbereich 16 der Verfahrensstrecke 10 gestaucht und gedehnt. Zur Stauchung und zur Dehnung des Polymerstrangs 12 in dem Teilbereich 18 der Verfahrensstrecke 10 stellt die Steuer- und Regeleinheit 86 die Temperaturdifferenz zwischen dem Spinndüsenausgangsbereich 84 und dem ersten Fällbad 36 ein. In diesem Ausführungsbeispiel stellt die Steuer- und Regeleinheit 86 eine Temperatur in dem Spinndüsenausgangsbereich 84 von 40 °C ein. Sie stellt somit eine Temperaturdifferenz zwischen dem Spinndüsenausgangsbereich 84 und dem ersten Fällbad 36 von 25 °C ein.

Des Weiteren ist die Steuer- und Regeleinheit 86 der Einrichtung 14 zur Stauchung und zur Dehnung des Polymerstrangs 12 dazu vorgesehen, eine Innenfluidtemperatur und eine Polymerstrangtemperatur einzustellen, die sich voneinander unterscheiden. Die Steuer- und Regeleinheit 86 stellt eine Innenfluidtemperatur und eine Polymerstrangtemperatur mittels der Temperatur- und Druckeinstelleinheit 74 ein, wobei sich die Innenfluidtemperatur und die Polymerstrangtemperatur voneinander unterscheiden. Die Steuer- und Regeleinheit 86 ist zur Einstellung von einer Temperaturdifferenz zwischen dem Innenfluid und dem Polymerstrang 12 in der Spinndüseneinheit 70 vorgesehen. Die Steuer- und Regeleinheit 86 stellt mittels der Temperatur- und Druckeinstelleinheit 74 zur Stauchung und Dehnung des Polymerstrangs 12 eine Innenfluidtemperatur ein, die kleiner ist als die Polymerstrangtemperatur. Die Steuer- und Regeleinheit 86 der Einrichtung 14 kühlt das Innenfluid mittels der Temperatur- und Druckeinstelleinheit 74 zur Stauchung und zur Dehnung des Polymerstrangs 12. In diesem Ausführungsbeispiel stellt die Steuer- und Regeleinheit 86 eine Polymerstrangtemperatur des Polymerstrangs 12 in der Spinndüseneinheit 70 von 25 - 30 °C ein.

Außerdem ist die Steuer- und Regeleinheit 86 der Einrichtung 14 zur Stauchung und zur Dehnung des Polymerstrangs 12 dazu vorgesehen, einen Innenfluiddruck und einen Polymerstrangdruck einzustellen, die sich voneinander unterscheiden. Die Steuer- und Regeleinheit 86 stellt einen Innenfluiddruck und einen Polymerstrangdruck mittels der Temperatur- und Druckeinstelleinheit 74 ein, wobei sich der Innenfluiddruck und der Polymerstrangdruck voneinander unterscheiden. Die Steuer- und Regeleinheit 86 ist zur Einstellung von einer Druckdifferenz zwischen dem Innenfluid und dem als Polymerlösung ausgebildeten Polymerstrang 12 vorgesehen. Die Steuer- und Regeleinheit 86 stellt in diesem Ausführungsbeispiel einen Innenfluiddruck ein, der kleiner ist als der Polymerstrangdruck. In diesem Ausführungsbeispiel stellt die Steuer- und Regeleinheit 86 einen Polymerstrangdruck von 5 bar ein.

Die Spinndüse 72 und der Spinndüsenausgangsbereich 84 bilden teilweise die Einrichtung 14, die zur Stauchung und Dehnung des Polymerstrangs vorgesehen ist, aus. Die Spinndüse 72 weist einen freien Polymerstrangaustritt 88 und der Spinndüsenausgangsbereich 84 weist einen Umgebungsdruck auf, der sich von dem Innenfluiddruck und dem Polymerstrangdruck unterscheidet, wodurch der Polymerstrang 12 beim Verlassen der Spinndüse 72 in dem Teilbereich 16 gestaucht und gedehnt wird.

Das erste Fällbad 36 der vier Fällbäder 36, 38, 40, 42 bildet ebenfalls teilweise die Einrichtung 14, die zur Stauchung und Dehnung des Polymerstrangs 12 vorgesehen ist, aus. Das erste Fällbad 36 weist zur Stauchung und Dehnung des Polymerstrangs 12 und damit zur teilweisen Ausbildung der Einrichtung 14 eine Fällbadtiefe 44 von mehr als 0,5 Meter auf. Im Vergleich zu Fällbadtiefen des zweiten Fällbads 38, des dritten Fällbads 40 und des vierten Fällbads 42 weist das erste Fällbad 36 die größte Fällbadtiefe 44 auf.

Das erste Fällbad 36 stellt zur Stauchung und zur Dehnung eine durch die Fällbadtiefe 44 von mehr als 0,5 Meter resultierende und auf den Polymerstrang 12 wirkende Druckdifferenz bereit. Die Druckdifferenz wirkt auf den Polymerstrang 12, der durch das erste Fällbad 36 geführt wird, wodurch der Polymerstrang 12 aufgrund des Druckunterschieds in dem ersten Fällbad 36 gestaucht und gedehnt wird. Der Polymerstrang 12 wird durch die Druckdifferenz in dem Fällbad 36 in dem Teilbereich 18 der Verfahrensstrecke 10 gestaucht und gedehnt.

Durch die auf den Polymerstrang 12 wirkende Druckdifferenz in dem ersten Fällbad 36 wird der Polymerstrang 12 in dem ersten Fällbad 36 zusammengedrückt und wieder entspannt, wodurch die Membraninnenfläche 46 aufgeraut wird. Die Druckdifferenz in dem Fällbad 36 wirkt während einer Ausfällung des Lösungsmittels und damit während der Ausbildung der Membran auf den Polymerstrang 12. In diesem Ausführungsbeispiel weist das Fällbad 36 zur Stauchung und Dehnung des Polymerstrangs 12 eine Fällbadtiefe 44 von mehr als 1 Meter auf. Die Fällbadtiefe 44 des ersten Fällbads 36 beträgt ca. 1,5 Meter.

Zur Nutzung der Druckdifferenz in dem ersten Fällbad 36 und damit zur Führung des Polymerstrangs 12 in einer Fällbadtiefe 44 von mehr als 0,5 Meter weist die Membranherstellvorrichtung die erste Umlenkrolle 58 auf. Die Umlenkrolle 58 ist dazu vorgesehen, den Polymerstrang 12 im Bereich eines Fällbadbodens 90 des ersten Fällbads 36 zu führen. Sie ist im Bereich des Fällbadbodens 90 des ersten Fällbads 36 angeordnet. Die Umlenkrolle 58 ist dazu vorgesehen, eine wirksame Fällbadtiefe einzustellen. Die wirksame Fällbadtiefe ist dabei eine Fällbadtiefe, in der der Polymerstrang 12 in dem Fällbad 36 geführt wird. Grundsätzlich können die Fällbäder 38, 40, 42 zusätzlich oder alternativ ebenfalls eine Fällbadtiefe von mehr als 0,5 Meter aufweisen. Weiter ist es denkbar, dass die durch die Umlenkrolle 58 einstellbare wirksame Fällbadtiefe und damit die auf den Polymerstrang 12 wirkende Druckdifferenz veränderbar ist.

In diesem Ausführungsbeispiel ist die Einrichtung 14, die zur Stauchung und Dehnung des Polymerstrangs 12 vorgesehen ist, mittels der Steuer- und Regeleinheit 86, mittels der Fördereinheiten 28, 30, 32, 34, mittels der Temperatur- und Druckeinstelleinheit 74, mittels der Heizeinheiten 76, 78, 80, 82, mittels der Spinndüse 72, mittels des Spinndüsenausgangsbereichs 84 und mittels des ersten Fällbads 36 ausgebildet. Grundsätzlich kann die Einrichtung 14 mittels anderer, dem Fachmann als sinnvoll erscheinender Einheiten ausgebildet werden. Weiter ist es denkbar, dass die Einrichtung 14 zur Stauchung und Dehnung des Polymerstrangs 12 auf wenigstens eine der Einheiten verzichtet. Außerdem ist es denkbar, dass die Einrichtung 14 zur Stauchung und Dehnung lediglich die Fördereinheiten 28, 30, 32, 34, lediglich die Temperatur- und Druckeinstelleinheit 74, lediglich die Heizeinheiten 76, 78, 80, 82, lediglich die Spinndüse 72, lediglich den Spinndüsenausgangsbereich 84 oder lediglich das erste Fällbad 36 nutzt. Besonders bevorzugt nutzt die Einrichtung 14 wenigstens die Fördereinheiten 28, 30, 32, 34 zur Stauchung und Dehnung des Polymerstrangs 12.

Die durch die Membranherstellvorrichtung ausgebildete Membran ist in einem Querschnitt schematisch in der Figur 2 dargestellt. Die Membran ist als eine Phaseninversionsmembran ausgebildet. Sie ist als eine Hohlfasermembran ausgebildet. Die Membran ist als eine Phaseninversionshohlfasermembran ausgebildet. Die Membran ist mittels eines Phaseninversionsverfahrens hergestellt. Die Membran wird in einem Flüssigkeitsfilter, insbesondere in einem Wasserfilter eingesetzt. Die Membran ist zur Flüssigkeitsaufbereitung, insbesondere zur Wasseraufbereitung vorgesehen. Die Membran ist zur Filtration vorgesehen.

Die Membran weist eine zylindrische Membranaußenfläche 48 und eine zylindrische Membraninnenfläche 46 auf. Die Membraninnenfläche 46 ist als eine innere Membranoberfläche und die Membranaußenfläche 48 als eine äußere Membranoberfläche ausgebildet. Sie sind jeweils offenporig ausgebildet. Die Membraninnenfläche 46 ist durch eine zylindrische Innenkanalfläche ausgebildet. Die Innenkanalfläche bildet einen längs verlaufenden Innenkanal 92 der Membran aus. Sie ist als eine Innenkanalwand ausgebildet. Die Membranaußenfläche 48 umgibt die Membraninnenfläche 46 und damit den längs verlaufenden Innenkanal 92. Der Innenkanal 92 ist zum Transport einer filternden Flüssigkeit oder einer gefilterten Flüssigkeit vorgesehen, je nachdem, in welche Richtung ein Permeat fließt bzw. in welche Richtung eine Permeation stattfindet. Die Membran ist als eine Einkanalmembran ausgebildet. Grundsätzlich kann die Membran auch als eine Mehrkanalmembran ausgebildet sein und somit mehr als einen Innenkanal 92 aufweisen.

Die Membran weist eine poröse Stützschicht 94 und eine poröse trennaktive Schicht 50 auf. Die trennaktive Schicht 50 ist an der Membraninnenfläche 46 angeordnet. Die trennaktive Schicht 50 ist als eine filtrationsaktive Schicht ausgebildet. Die trennaktive Schicht 50 ist im Vergleich zu der Stützschicht 94 sehr dünn und dicht. Die trennaktive Schicht 50 weist eine Dicke von 60 - 120 Mikrometer und besonders vorteilhaft eine Dicke von 80 - 100 Mikrometer auf.

Die Stützschicht 94 ist zur Stabilisierung vorgesehen. Die Stützschicht 94 weist eine im Vergleich zu der trennaktiven Schicht 50 hohe Permeabilität auf. Eine mittlere Porengröße der Stützschicht 94 ist größer als eine mittlere Porengröße der trennaktiven Schicht 50. Eine Porosität der Stützschicht 94 ist im Vergleich zu der Porosität der trennaktiven Schicht 50 sehr groß. Die trennaktive Schicht 50 und die Stützschicht 94 bestehen aus einem gleichen Polymer. Die Membran ist somit als eine integral-asymmetrische Membran ausgeführt. Die mittlere Porengrö-βe der trennaktiven Schicht 50 ist um etwa das Zehnfache kleiner als die mittlere Porengröße der Stützschicht 94. Die Stützschicht 94 weist eine mittlere Porengröße von 5 - 25 Mikrometer und besonders vorteilhaft eine mittlere Porengröße von 10 - 20 Mikrometer auf.

Zur Erhöhung einer aktiven Membraninnenfläche 46 und damit zur Erhöhung einer Durchflussleistung einer Membran ist die Membraninnenfläche 46 rau ausgebildet. Die Membraninnenfläche 46 weist in einer Dimension der mittleren Porengröße der Membraninnenfläche 46 eine hohe Rauigkeit auf. Die Rauigkeit ist als eine Mikrorauigkeit ausgebildet. Die Membraninnenfläche 46 weist eine Rautiefe von 500 Nanometer - 5 Mikrometer auf. In diesem Ausführungsbeispiel weist die Membraninnenfläche 46 eine Rautiefe von 1 Mikrometer auf. Grundsätzlich kann die Membraninnenfläche 46 die Rautiefe auch nur in Teilbereichen aufweisen.

Die Membranaußenfläche 48 weist eine Rautiefe auf, die sich von der Rautiefe der Membraninnenfläche 46 unterscheidet. Die Rautiefe der Membranaußenfläche 48 ist kleiner als die Rautiefe der Membraninnenfläche 46. Die Membranaußenfläche 48 ist im Vergleich zu der Membraninnenfläche 46 glatt ausgebildet. Weiter ist es auch denkbar, dass alternativ oder zusätzlich die Membranaußenfläche 48 wenigstens in einem Teilbereich eine Rautiefe von 500 Nanometer - 5 Mikrometer aufweist und somit rau ausgebildet ist. In diesem Ausführungsbeispiel weist die Membranaußenfläche 48 eine Rautiefe von kleiner als 1 Mikrometer auf.

Die Membran besteht aus einem Polymer mit erhöhter Hydrophilie, d.h. mit einer erhöhten Wasserbenetzbarkeit. Die Membran besteht aus Polyethersulfon Als Lösungsmittel für das Polymer wird das Lösungsmittel N-Methyl-2-Pyrrolidon verwendet. Zur Polymerisation wird Polyvinylpyrrolidon verwendet. Die Polymerlösung zur Herstellung der Membran weist somit zumindest Polyethersulfon, N-Methyl-2-Pyrrolidon und Polyvinylpyrrolidon auf.

Die Membran wird durch die oben beschriebene Membranherstellvorrichtung hergestellt. Der als Polymerlösung ausgebildete Polymerstrang 12 wird mittels der Spinndüse 72 extrudiert und entlang der Verfahrensstrecke 10 geführt. Der aus der Spinndüse 72 honigartig austretende Polymerstrang 12 wird zur Ausfällung des Lösungsmittels und damit zur Koagulation mittels der vier Fördereinheiten 28, 30, 32, 34 durch vier Fällbäder 36, 38, 40, 42 geführt, wodurch entlang der Verfahrensstrecke 10 sich der Polymerstrang 12 zu der Membran bildet und einen festen Zustand annimmt.

Damit sich eine raue Membraninnenfläche 46 ausbildet, wird der Polymerstrang 12 in den Teilbereichen 16, 18, 20, 22, 24, 26 der Verfahrensstrecke 10 gestaucht und gedehnt. Der Polymerstrang 12 wird während der Extrusion und während der Ausfällung bzw. der Koagulation und damit während der Ausbildung zur Membran gestaucht und gedehnt.

Zur Stauchung und Dehnung wird der Polymerstrang 12 entlang der Verfahrensstrecke 10 mit unterschiedlichen Transportgeschwindigkeiten in den Teilbereichen 20, 22, 24, 26 der Verfahrensstrecke 10 geführt. Der Polymerstrang 12 wird mittels einer Transportgeschwindigkeitsdifferenz gestaucht und gedehnt. Gleichzeitig wird der Polymerstrang 12 mit einer mittleren Transportgeschwindigkeit entlang der Verfahrensstrecke 10 geführt, die aus vier verschiedenen Transportgeschwindigkeiten der Fördereinheiten 28, 30, 32, 34 resultiert.

Die unterschiedlichen Transportgeschwindigkeiten der Fördereinheiten 28, 30, 32, 34 können durch eine Veränderung einer Rotationsgeschwindigkeit der entsprechenden Antriebswelle bzw. Antriebsrolle 54 und/oder durch unterschiedliche Radien der entsprechenden Antriebsrolle 54 realisiert werden.

Weiter wird der Polymerstrang 12 zur Stauchung und Dehnung durch Fällbäder 36, 38, 40, 42 mit unterschiedlicher Fällbadtemperatur geführt und damit entlang der Verfahrensstrecke 10 mit unterschiedlichen Fällbadtemperaturen beaufschlagt.

Zusätzlich wird der Polymerstrang 12 zur Stauchung und Dehnung durch das Fällbad 36 mit zumindest 0,5 Meter Fällbadtiefe 44 geführt und aufgrund einer Wasserdruckdifferenz in dem Fällbad 36 gestaucht und gedehnt. Der Polymerstrang 12 wird zur Stauchung und Dehnung in zumindest 0,5 Meter Fällbadtiefe 44 durch das Fällbad 36 geführt. Er wird zur Stauchung und zur Dehnung im Bereich des Fällbadbodens 90 geführt.

Des Weiteren wird zur Stauchung und Dehnung des Polymerstrangs 12 eine Innenfluidtemperatur eingestellt, die sich von einer Polymerstrangtemperatur unterscheidet. Das Innenfluid wird zur Stauchung und Dehnung des Polymerstrangs 12 gekühlt.

Außerdem wird zur Stauchung und Dehnung des Polymerstrangs 12 ein Innenfluiddruck eingestellt, der sich von einem Polymerstrangdruck unterscheidet.

Nach der Verfahrensstrecke 10 und damit nach der Extrusion und der Ausfällung bzw. Koagulation wird der als Membran ausgebildete Polymerstrang 12 aufgewickelt. Zur Nachbehandlung wird der aufgewickelte Polymerstrang 12 gebündelt und geschnitten.

In einem Nachbehandlungsvorgang wird der gebündelte als Phaseninversionsmembran ausgebildete Polymerstrang zuerst gespült. In einer ersten Nachbehandlung wird der gebündelte Polymerstrang zur Erhöhung der Porosität nach dem Spülen in Natriumhypochlorit bzw. in eine Natriumhypochloritlösung eingelegt, wodurch sich das Polyvinylpyrrolidon herausgelöst. Alternativ kann der gebündelte Polymerstrang in der ersten Nachbehandlung in Kaliumhypochlorit bzw. in eine Kaliumhypochloritlösung eingelegt werden.

In einer zweiten Nachbehandlung wird der gebündelte Polymerstrang zur Verbesserung einer Benetzbarkeit in Glycerin bzw. in eine Glycerinlösung eingelegt. Optional kann der gebündelte Polymerstrang nach der ersten Nachbehandlung gespült werden. Nach der zweiten Nachbehandlung wird der gebündelte Polymerstrang getrocknet und zu einem Endprodukt weiterverarbeitet.

Es wird explizit darauf hingewiesen, dass sich die Erfindung nicht auf eine Anzahl der Fördereinheiten 28, 30, 32, 34, eine Anzahl der Fällbäder 36, 38, 40, 42, eine Anzahl der Umlenkrollen 58, 60, 62, 64, eine Anzahl von Aufwickelrollen 68, eine Anzahl der Heizeinheiten 76, 78, 80, 82, eine Anzahl von Spinndüsen 72, eine Anzahl von Führungen durch die Fällbäder 36, 38, 40, 42, eine Anzahl von Polymersträngen 12 und/oder dergleichen beschränkt.

**Bezugszeichen**

| | | | |
|---|---|---|---|
| 10 | Verfahrensstrecke | 54 | Antriebsrolle |
| 12 | Polymerstrang | 56 | Antriebsmotor |
| 14 | Einrichtung | 58 | Umlenkrolle |
| 16 | Teilbereich | 60 | Umlenkrolle |
| 18 | Teilbereich | 62 | Umlenkrolle |
| 20 | Teilbereich | 64 | Umlenkrolle |
| 22 | Teilbereich | 66 | Aufwickeleinheit |
| 24 | Teilbereich | 68 | Aufwickelrolle |
| 26 | Teilbereich | 70 | Spinndüseneinheit |
| 28 | Fördereinheit | 72 | Spinndüse |
| 30 | Fördereinheit | 74 | Temperatur- und Druckeinstelleinheit |
| 32 | Fördereinheit | 76 | Heizeinheit |
| 34 | Fördereinheit | 78 | Heizeinheit |
| 36 | Fällbad | 80 | Heizeinheit |
| 38 | Fällbad | 82 | Heizeinheit |
| 40 | Fällbad | 84 | Spinndüsenausgangsbereich |
| 42 | Fällbad | 86 | Steuer- und Regeleinheit |
| 44 | Fällbadtiefe | 88 | Polymerstrangaustritt |
| 46 | Membraninnenfläche | 90 | Fällbadboden |
| 48 | Membranaußenfläche | 92 | Innenkanal |
| 50 | trennaktive Schicht | 94 | Stützschicht |
| 52 | Transportrichtung | | |

## Patentansprüche

1. Verfahren zur Herstellung einer Phaseninversionsmembran mit zumindest einer Membraninnenfläche (46) und einer Membranaußenfläche (48) wobei zur Ausbildung der Phaseninversionsmembran entlang einer Verfahrensstrecke (10) zumindest ein Polymerstrang (12) geführt wird, wobei der Polymerstrang (12) zur Stauchung und Dehnung entlang der Verfahrensstrecke (10) mit unterschiedlichen Transportgeschwindigkeiten geführt wird, wobei der Polymerstrang (12) mittels zumindest zwei Fördereinheiten (28, 30, 32, 34) der Verfahrensstrecke (10) transportiert wird, wobei die zumindest zwei Fördereinheiten (28, 30, 32, 34) entlang der Transportrichtung (52) räumlich getrennt voneinander und nacheinander angeordnet sind, wobei mittels einer Steuer- und Regeleinheit (86) einer Einrichtung (14) Transportgeschwindigkeiten der zumindest zwei Fördereinheiten (28, 30, 32, 34) eingestellt werden, die sich voneinander unterscheiden, wobei der Polymerstrang (12) zur Bereitstellung einer rauen Membraninnenfläche (46) der Phaseninversionsmembran und damit zur Realisierung einer rauen Membranstruktur mittels der Einrichtung (14) gezielt gestaucht und gedehnt wird, sodass eine Verformung des Polymerstrangs entlang einer Längsachse des Polymerstrangs erfolgt, wobei der Polymerstrang (12) zur Stauchung und Dehnung entlang der Verfahrensstrecke (10) mit unterschiedlichen Transportgeschwindigkeiten geführt wird, wobei mittels der Steuer- und Regeleinheit (86) der Einrichtung (14) eine Transportgeschwindigkeitsdifferenz zwischen den zumindest zwei Fördereinheiten (28, 30, 32, 34) von zumindest 1 Prozent und höchstens 5 Prozent eingestellt wird, wobei mittels den Fördereinheiten (28, 30, 32, 34) eine mittlere Transportgeschwindigkeit des Polymerstrangs (12) entlang der Verfahrensstrecke (10) eingestellt wird, die zwischen 0,5 und 5 Zentimeter pro Sekunde liegt, wobei der aus der Spinndüse (72) austretende Polymerstrang (12) zur Entfernung eines Lösungsmittels und damit zur Koagulation mittels vier Fördereinheiten (28, 30, 32, 34) durch vier Fällbäder (36, 38, 40, 42) geführt wird, wodurch entlang der Verfahrensstrecke (10) sich der Polymerstrang (12) zu der Membran bildet und einen festen Zustand annimmt, wobei eine erste Fördereinheit (30) eine Transportgeschwindigkeit aufweist, die im Vergleich zu den anderen drei Transportgeschwindigkeiten der Fördereinheiten (30, 32, 34) am höchsten ausgebildet ist, wobei eine zweite Fördereinheit (30) eine Transportgeschwindigkeit aufweist, die am zweithöchsten ausgebildet ist, wobei eine dritte Fördereinheit (32) eine Transportgeschwindigkeit aufweist, die am zweitkleinsten ausgebildet ist und wobei eine vierte Fördereinheit (34) eine Transportgeschwindigkeit aufweist, die am kleinsten ausgebildet ist.

## Claims

1. Method for producing a phase inversion membrane with at least one inner membrane surface (46) and an outer membrane surface (48),
wherein in order to form the phase inversion membrane at least one polymer strand (12) is guided along a process route (10),
wherein for a compression and expansion the polymer strand (12) is guided along the process route (10) at different transport speeds,
the polymer strand (12) being transported by means of at least two conveying units (28, 30, 32, 34) of the process route (10),
the at least two conveying units (28, 30, 32, 34) being arranged along the transport direction (52) spaced apart from one another and behind one another, wherein transport speeds of the at least two conveying units (28, 30, 32, 34), which differ from each other, are adjusted by a control and regulation unit (86) of an apparatus (14),
wherein for the purpose of providing a rough inner membrane surface (46) of the phase inversion membrane - and thus for realizing a rough membrane structure - the polymer strand (12) is selectively compressed and expanded, as a result of which there is a deformation of the polymer strand (12) along a longitudinal axis of the polymer strand,
wherein for the compression and expansion the polymer strand (12) is guided along the process route (10) at different transport speeds,
wherein a transport speed difference between the at least two conveying units (28, 30, 32, 34) that is at least 1 per cent and maximally 5 per cent is adjusted by the control and regulation unit (86) of the apparatus (14),
wherein an average transport speed of the polymer strand (12) along the process route (10), which is between 0.5 cm/s and 5 cm/s, is adjusted via the conveying units (28, 30, 32, 34),
wherein for a removal of a solvent and thus for a coagulation, the polymer strand (12) exiting the spinneret (72) is guided by four conveying units (28, 30, 32, 34) through four precipitation baths (36, 38, 40, 42), as a result of which the polymer strand (12) is formed into a membrane along the process route (10) and assumes a solid state,
wherein a first conveying unit (30) has a transport speed that is the highest in comparison to the other three transport speeds of the conveying units (30, 32, 34),
wherein a second conveying unit (30) has a transport speed that is realized as the second highest,
wherein a third conveying unit (32) has a transport speed that is realized as the second smallest, and
wherein a fourth conveying unit (34) has a transport speed that is realized as the smallest.

## Revendications

1. Procédé de production d'une membrane à inversion de phase ayant au moins une surface-membrane intérieure (46) et une surface-membrane extérieure (48), où pour former la membrane à inversion de phase au moins un brin de polymère (12) est guidé le long d'une voie de processus (10),
le brin de polymère (12) étant transporté le long de la voie de processus (10) avec des vitesses de transport différentes pour un tassement et allongement, le brin de polymère (12) étant guidé par le biais d'au moins deux unités de convoyage (28, 30, 32, 34) de la voie de processus (10),
les au moins deux unités de convoyage (28, 30, 32, 34) étant disposées le long de la direction de transport (52) d'une telle manière qu'elles sont spatialement à l'écart l'une de l'autre, et l'une après l'autre,
où par une unité de commande et régulation (86) d'un dispositif (14) des vitesses de transport des au moins deux unités de convoyage (28, 30, 32, 34), diffèrant l'une de l'autre, sont ajustées,
où, pour fournir une surface-membrane intérieure (46) rugueuse - et donc pour réaliser une structure de membrane rugueuse - le brin de polymère (12) est sélectivement tassé et allongé par le dispositif (14),
en sorte qu'il y ait une déformation du brin de polymère (12) le long d'un axe longitudinal du brin de polymère,
où pour le tassement et allongement le brin de polymère (12) et guidé le long de la voie de processus (10) avec des vitesses de transport différentes,
où par l'unité de commande et régulation (86) du dispositif (14) une différence des vitesses de transport entre les au moins deux unités de convoyage (28, 30, 32, 34) est ajustée qui est au moins 1 % et maximalement 5 %,
où par le biais des unités de convoyage (28, 30, 32, 34) une vitesse de transport moyenne du brin de polymère (12), le long de la voie de processus (10), est ajustée qui est entre 0,5 cm/s et 5 cm/s,
où pour enlever un solvant et ainsi pour une coagulation le brin de polymère (12) sortant de la filière (72) est guidé par quatre unités de convoyage (28, 30, 32, 34) à travers de quatre bains de précipitation (36, 38, 40, 42),
moyennant quoi le brin de polymère (12) se forme en membrane le long de la voie de processus (10) et change dans l'état solide,
une première unité de convoyage (30) ayant une vitesse de transport qui est la plus grande par rapport aux autres trois vitesses de transport des unités de convoyage (30, 32, 34),
une deuxième unité de convoyage (30) ayant une vitesse de transport qui est la seconde plus grande,
une troisième unité de convoyage (32) ayant une vitesse de transport qui est la deuxième moins grande, et
une quatrième unité de convoyage (34) ayant une vitesse de transport qui est la moins grande.
